(19) Europäisches Patentamt
European Patent Office
Office européen des brevets

(11) Veröffentlichungsnummer : **0 078 548**
**B1**

(12) # EUROPÄISCHE PATENTSCHRIFT

(45) Veröffentlichungstag der Patentschrift : **21.01.87**

(21) Anmeldenummer : **82110167.2**

(22) Anmeldetag : **04.11.82**

(51) Int. Cl.[4] : **C 08 G 77/06**, C 08 G 77/58, C 08 G 77/18, C 08 G 77/20, C 08 G 77/26, C 08 G 77/38, C 08 F283/12, C 08 L 83/04, C 08 K 5/05, C 08 K 3/20, C 08 J 5/00

(54) **Kieselsäureheteropolykondensate und deren Verwendung für optische Linsen, insbesondere Kontaktlinsen.**

(30) Priorität : **04.11.81 DE 3143820**

(43) Veröffentlichungstag der Anmeldung : **11.05.83 Patentblatt 83/19**

(45) Bekanntmachung des Hinweises auf die Patenterteilung : **21.01.87 Patentblatt 87/04**

(84) Benannte Vertragsstaaten : **AT CH DE FR GB IT LI**

(56) Entgegenhaltungen :
**EP-A- 0 002 745**
**EP-A- 0 019 738**
**DE-A- 2 758 414**
**DE-A- 2 829 367**
**DE-A- 3 003 300**
**DE-B- 2 410 990**
**GB-A- 2 093 471**
**US-A- 2 512 058**

(73) Patentinhaber : **Fraunhofer-Gesellschaft zur Förderung der angewandten Forschung e.V.**
**Leonrodstrasse 54**
**D-8000 München 19 (DE)**

**DR. THILO & CO. Contactlinsen GmbH**
**Rudolf-Diesel-Ring 21**
**D-8029 Sauerlach (DE)**

(72) Erfinder : **Schmidt, Helmut, Dr.**
**Tilman-Riemenschneider-Strasse 15**
**D-8706 Höchberg (DE)**
Erfinder : **Philipp, Gottfried, Dr.**
**Oskar-Popp-Strasse 7**
**D-8702 Kist (DE)**
Erfinder : **Kreiner, Christine F., Dr.**
**Krenkistrasse 10**
**D-8000 München 81 (DE)**

(74) Vertreter : **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 078 548 B1**

Jouve, 18, rue St-Denis, 75001 Paris, France

**Beschreibung**

Kieselsäureheteropolykondensate sind z. B. in der DE-A-2 758 414 beschrieben, jedoch geht diese Druckschrift auf optische Anwendungen und insbesondere auf die für Kontaktlinsen erforderliche Werkstoffauswahl nicht ein.

Für Kontaktlinsen geeignete Polymerwerkstoffe müssen spezifischen und kritischen Anforderungen hinsichtlich ihrer physikalisch-optischen, physiologisch-mechanischen und chemischen Eigenschaften genügen. So müssen die Materialien z. B. im sichtbaren Lichtbereich transparent sein, einen Brechungsindex vorteilhafterweise von 1,4 bis 1,5 aufweisen und insgesamt homogene und stabile optische Eigenschaften besitzen. Im physiologischen Bereich wird gefordert, daß der Polymerwerkstoff keine toxischen Substanzen abgibt und auch keine Abwehrreaktionen des Körpers hervorruft, d. h. den Hornhautstoffwechsel aufrechterhält bzw. fördert. Dies bedeutet, daß das Material über eine gute Benetzbarkeit verfügen muß, damit der Tränenfluß nicht behindert wird. Eine gute Benetzbarkeit liegt dann vor, wenn ein Tropfen einer physiologischen Kochsalzlösung von einem Volumen von 0,6 µl auf eine ebene Fläche des Polymers aufgebracht wird und der Grenzwinkel nicht größer als 30° ist. Das Polymer wird dabei vorher wassergelagert, so daß die Oberfläche so weit wie möglich hydratisiert ist. Weitere Voraussetzung ist, daß der Polymerwerkstoff eine gute Sauerstoffdurchlässigkeit aufweist, so daß die Hornhaut den für den Stoffwechsel notwendigen Sauerstoff vollständig aus der Luft erhält. Als ausreichend hierfür wird derzeit eine Sauerstoffpermeabilität vom

$$13 \times 10^{-11}\left[\frac{\text{ml } O_2 \cdot \text{cm}^2}{\text{cm}^3 \cdot \text{sec} \cdot \text{mmHg}}\right]$$

erachtet, wobei diese Permeabilität nach der Clark-Methode ermittelt wird. Eine weitere wünschenswerte Eigenschaft ist eine möglichst hohe Wärmeleitfähigkeit, damit kein wesentlicher Wärmestau hinter der Kontaktlinse entsteht. Die bisher bekannten Polymerwerkstoffe für Kontaktlinsen wie Polymethylmethacrylat (PMMA), Celluloseacetatbutyrat (CAB), Methylmethacrylat (MMA)-Copolymere, Hydroxyethylmethacrylat (HEMA)-Hydrogele und Siliconkautschuk erfüllen die genannten Kriterien nur zum Teil. So sind Kontaktlinsen aus PMMA zwar äußerst formstabil und zeichnen sich durch hohe optische Leistungsfähigkeit aus. Sie sind jedoch nahezu nicht sauerstoffdurchlässig und bewirken so nach längerer Tragezeit Hornhautödeme, vertical striae und Hornhautstippen. HEMA-haltige Kontaktlinsen sind aufgrund des Hydrogel-Charakters des Polymers zwar von höherer Sauerstoffpermeabilität in Abhängigkeit vom Wassergehalt, allerdings neigen diese Materialien zur Ausbildung der bei Hydrogelen bekannten Ablagerungen und Einlagerungen von Fremdbestandteilen in die Linsenmatrix. Dies kann nach längerer Tragezeit zu Unverträglichkeitsreaktionen im Auge führen. Außerdem ist ihre Tragedauer nur beschränkt. Aufgrund der geringen mechanischen Stabilität der Hydrogele ist des weiteren die optische Leistungsfähigkeit dieser Linsen gering, so daß nicht jede Fehlsichtigkeit korrigiert werden kann. Kontaktlinsen aus CAB weisen aufgrund ihres Wassergehalts einen relativ stark ausgeprägten Hydratations- und Dehydratationszyklus auf und neigen außerdem während des Tragens zur Ausbildung von Lipidablagerungen, was dazu führt, daß die Linsen verschmieren und die Kontaktlinsenträger stark behindert werden. Außerdem reicht die Sauerstoffdurchlässigkeit nicht aus, so daß ähnliche Mangelerscheinungen wie bei PMMA auftreten, wenngleich geringer ausgeprägt. Siliconkautschuklinsen weisen zwar eine hohe Sauerstoffdurchlässigkeit auf, die weit über der liegt, um die Cornea während des Tragens ausreichend mit Sauerstoff zu versorgen. Diese Linsen sind allerdings äußerst schlecht benetzbar, so daß ohne weitere Oberflächenbehandlung eine ständige mechanische Reizung der Cornea auftritt. Kontaktlinsen aus Siliconkautschuk müssen deshalb einer nachträglichen Oberflächenhydrophilierung unterzogen werden. So oberflächenbehandelte Linsen haben den Nachteil, daß die Hydrophilie nach längerer Beanspruchung verloren geht und schlecht benetzbare Areale entstehen, die wiederum verstärkt zu Ablagerungen neigen.

Aufgabe der Erfindung ist es daher, einen Polymerwerkstoff zu schaffen, der für optische Linsen und insbesondere Kontaktlinsen geeignet ist. Er soll den dafür gestellten Anforderungen z. B. hinsichtlich Homogenität und Brechungsindex genügen und besonders für Kontaktlinsen die erforderliche hohe Sauerstoffdurchlässigkeit und Hydrophilie aufweisen. Diese Hydrophilie muß sich über das gesamte Material erstrecken, damit bei nachträglichen Bearbeitungen eventuelle Oberflächenhydrophilien nicht verloren gehen. Um die Bindung von Fremdstoffen zu verringern, sollte der Werkstoff ferner eine geringe Wasseraufnahmefähigkeit besitzen.

Zur Lösung dieser Aufgabe eignen sich nach einer Ausführungsform der Erfindung neue Kieselsäureheteropolykondensate, die dadurch erhältlich sind, daß man

a) mindestens eine im Reaktionsmedium lösliche Titan- oder Zirkonverbindung der Formel I

$$MR_4 \qquad (I)$$

in der M Titan oder Zirkon bedeutet und R Halogen, Hydroxy, Alkoxy, Acyloxy oder einen Chelatliganden darstellt ;

b) mindestens ein organofunktionelles Silan der Formel II

$$R_m''(R'''Y)_nSiX_{(4-m-n)} \quad (II)$$

in der R″ Alkyl, Alkenyl, Aryl, Arylalkyl, Alkylaryl, Arylalkenyl oder Alkenylaryl bedeutet, R‴ Alkylen, Phenylen, Alkylenphenylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe $—NR_2'$ (R′ = Wasserstoff und/oder Alkyl) bedeutet, Y ein hydrophiler Rest oder ein Rest ist, der unter den Reaktionsbedingungen in einen hydrophilen Rest umgewandelt wird, m den Wert 0, 1 oder 2 und n den Wert 1, 2 oder 3 haben, wobei m + n den Wert 1, 2 oder 3 hat ; und gegebenenfalls eine oder mehrere der folgenden Komponenten c) und/oder d) :

c) Organosilane der Formel III

$$R_n''SiX_{4-n} \quad (III)$$

in der R″, X und n die vorstehende Bedeutung haben,

d) im Reaktionsmedium lösliche, schwerflüchtige Oxide eines Elementes der Hauptgruppen Ia bis Va oder der Nebengruppen IVb oder Vb des Periodensystems, mit Ausnahme von Titan und Zirkon, oder im Reaktionsmedium lösliche, unter den Reaktionsbedingungen ein schwer-flüchtiges Oxid bildende Verbindungen eines dieser Elemente ; in Abwesenheit von Wasser, gegebenenfalls in Gegenwart eines wasserfreien Kondensationskatalysators und gegebenenfalls in Anwesenheit eines wasserfreien Lösungsmittels vorkondensiert und anschließend durch Zugabe von Wasser sowie gegebenenfalls eines Kondensationskatalysators weiterkondensiert, wobei 1 bis 60 Molprozent der Komponente a), 20 bis 99 Molprozent der Komponente b), 0 bis 40 Molprozent der Komponente c) und 0 bis 50 Molprozent der Komponente d) verwendet werden und die Gesamtmolzahl der Komponenten a), b), c) und d) 100 Prozent beträgt.

Vorzugsweise werden die Kieselsäureheteropolykondensate hergestellt durch Kondensation von 2 bis 30 Molprozent, insbesondere 5 bis 20 Molprozent, der Komponente a) und 50 bis 99 Molprozent, insbesondere 60 bis 95 Molprozent, der Komponente b). Bei Verwendung der Komponenten c) und d) beträgt deren Mindestgehalt vorzugsweise 1 und insbesondere 5 Molprozent, der Maximalgehalt 30 und insbesondere 20 Molprozent, jeweils bezogen auf die Gesamtmolzahl der Ausgangskomponenten.

In den vorstehenden Formeln (I), (II) und (III) können mehrmals vorhandene Reste R, R′, R″, R‴, X bzw. Y bei einer Verbindung jeweils die gleiche oder unterschiedliche Bedeutung haben.

Die Alkylreste bedeuten z. B. geradkettige, verzweigte oder cyclische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Pentyl, n-Hexyl und Cyclohexyl. Die Arylreste enthalten z. B. 6 bis 25, vorzugsweise 6 bis 14 und insbesondere 6 bis 10 Kohlenstoffatome. Spezielle Beispiele sind Phenyl und Naphthyl, wobei Phenyl bevorzugt ist.

Die Alkenylreste sind z. B. geradkettige, verzweigte oder cyclische Reste mit 2 bis 20, vorzugsweise 2 bis 10 Kohlenstoffatomen und insbesondere niedere Alkenylreste, wie Vinyl, Allyl und 2-Butenyl.

Die Alkoxy-, Acyloxy-, Alkylamino-, Arylalkyl-, Alkylaryl-, Arylalkenyl-, Alkenylaryl-, Alkylen, Alkylenphenylen-, Keto-, Carbonsäurealkylester- und substituierten Aminoreste leiten sich z. B. von den vorstehend genannten Alkyl-, Alkenyl- und Arylresten ab. Spezielle Beispiele sind Methoxy, Ethoxy, n- und i-Propoxy, n-, sek-, und tert.-Butoxy, Acetyloxy, Propionyloxy, Monomethylamino, Monoethylamino, Dimethylamino, Diethylamino, Monomethylanilino, Benzyl, Tolyl, Methylen, Ethylen, Dimethylen, Toluylen und Styryl.

Die genannten Reste können gegebenenfalls übliche Substituenten tragen, z. B. Halogenatome, niedere Alkylreste, Hydroxy-, Nitro- oder Aminogruppen.

Unter den Halogenen sind Fluor, Chlor und Brom bevorzugt und Chlor besonders bevorzugt.

Spezielle Beispiele für Titan- oder Zirkonverbindungen (a) sind $TiCl_4$, $ZrCl_4$, $Ti(OC_2H_5)_4$, $Ti(Oi-C_3H_7)_4$, $Ti(OC_4H_9)_4$, $Ti(kresyl)_4$, $Zr(OC_3H_7)_4$, $Zr(OC_4H_9)_4$, $Ti(acetylacetonato)_2(Oi-C_3H_7)_2$, $Zr(acetylacetonato)_4$ und andere Titan- oder Zirkonkomplexe mit Chelatliganden, die vorzugsweise über Sauerstoff und/oder Stickstoff koordiniert sind.

Bei den organofunktionellen Silanen (b) kann die Brückengruppe R‴ gegebenenfalls durch Sauerstoff- oder Schwefelatome oder —NH-Gruppen unterbrochen sein. Vorzugsweise entstehen auf diese Art 2 bis 10 sich wiederholende Struktureinheiten. Der Rest Y ist ein hydrophiler Rest oder ein Rest, der unter den angewandten Reaktionsbedingungen in einen hydrophilen Rest umgewandelt wird. Spezielle Beispiele für hydrophile Reste Y sind Halogenatome, Hydroxy-, Mercapto-, Polyol- (z. B. Glykyl oder Glyceryl), gegebenenfalls substituierte Amino-, quaternäre Ammonium-, Amid-, Polyamid-, Aldehyd-, Keto-, Carboxy-, Carbonsäurealkylester-, Sulfonsäure-, Phosphorsäure, Acryloxy- und Methacryloxygruppen. Ein spezielles Beispiel für einen Rest, der unter den Reaktionsbedingungen einen hydrophilen

Rest ergibt, ist die Epoxygruppe.

Spezielle Beispiele für organofunktionelle Silane (b) sind :
$(C_2H_5O)_3—Si—(CH_2)_3—OH$, $(C_2H_5O)_3—Si—CH_2—NH_2$,
$(CH_3O)_3—Si—(CH_2)_3—NH—(CH_2)_2—NH_2$, $(C_2H_5O)_3—Si—p—C_6H_4—NH_2$,
$(C_2H_5O)_3—Si—(CH_2)_3—OH$, $(CH_3O)_3—Si—(CH_2)_4—SH$,
$CH_3(CH_3O)_2—Si—CH_2—CH(CH_3)—CH_2—NH—(CH_2)_2—NH_2$,
$CH_3(C_2H_5O)_2—Si—(CH_2)_4—NH_2$, $(CH_3)_2C_2H_5O—Si—CH_2—NH_2$,
$CH_3(C_2H_5O)_2—Si—CH_2—OH$,

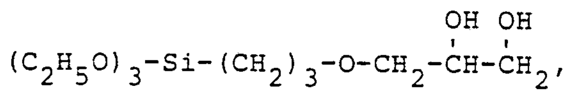

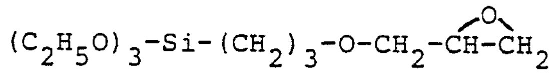 und

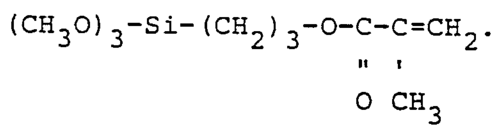

Bei den organofunktionellen Silanen (b) und den Organosilanen (c) haben m vorzugsweise den Wert O und n vorzugsweise den Wert 2.

Spezielle Beispiele für Organosilane (c) sind :
$(CH_3)_2—Si—Cl_2$, $(CH_3)_2—Si—(OCH_3)_3$, $(CH_3)_2—Si—(OC_2H_5)_2$,
$(C_6H_5)_2—Si—Cl_2$, $(C_6H_5)_2—Si—(OC_2H_5)_2$, $CH_2 = CH—Si—Cl_3$,
$CH_2 = CH—CH_2—Si—(OC_2H_5)_3$, $CH_2 = CH—CH_2—Si—(CH_3COO)_3$,
$(i—C_3H_7)_3—Si—OH$ und $(CH_3)_2—Si—(OH)_2$.

Diese Silane sind zum Teil Handelsprodukte oder sie lassen sich nach bekannten Methoden herstellen ; vgl. W. Noll, « Chemie und Technologie der Silicone », Verlag Chemie GmbH, Weinheim/Bergstrasse (1968).

Anstelle der monomeren Ausgangssilane (b) und (c) können gegebenenfalls auch vorkondensierte, im Reaktionsmedium lösliche Oligomere dieser Silane eingesetzt werden ; d. h. geradkettige oder cyclische, niedermolekulare Teilkondensate (Polyorganosiloxane) mit einem Kondensationsgrad von z. B. etwa 2 bis 6.

Als Komponente (d) werden im Reaktionsmedium lösliche, schwerflüchtige Oxide oder derartige schwer-flüchtige Oxide bildende Verbindungen von Elementen der Hauptgruppen Ia bis Va oder der Nebengruppen IVb oder Vb des Periodensystems eingesetzt. Vorzugsweise leitet sich die Komponente (d) von folgenden Elementen ab : Na, K, Mg, Ca, B, Al, Si, Pb, P, As und/oder V, wobei Na, Ca, Mg, B, Al, Si und P besonders bevorzugt sind.

Unter den schwerflüchtigen Oxiden sind $Na_2O$, $K_2O$, CaO, $As_2O_3$ und $P_2O_5$ und $B_2O_3$ besonders bevorzugt.

Im Reaktionsmedium lösliche, schwerflüchtige Oxide bildende Verbindungen sind z. B. anorganische Säuren, wie Phosphorsäure und Borsäure, sowie deren Ester. Ferner eignen sich z. B. Halogenide, wie $SiCl_4$ und $HSiCl_3$, und Alkoxide, wie NaOR, KOR, $Ca(OR)_2$, $Al(OR)_3$ oder $Si(OR)_4$, wobei sich R von niederen Alkoholen, wie Methanol, Ethanol, Propanol oder Butanol, ableitet. Weitere verwendbare Ausgangsverbindung sind entsprechende Salze mit flüchtigen Säuren, z. B. Acetate, wie Siliciumtetraacetat, basische Acetate, wie basisches Bleiacetat, und Formiate.

Zur Herstellung der Kieselsäureheteropolykondensate werden die vorzugsweise wasserfreien Ausgangskomponenten im gewünschten Mengenverhältnis gegebenenfalls in Gegenwart eines wasserfreien organischen Lösungsmittels und gegebenenfalls in Anwesenheit eines wasserfreien Kondensationskatalysators vorkondensiert. Beispiele für geeignete Lösungsmittel sind Alkohole, vorzugsweise niedere Alkohole, wie Methanol, Ethanol oder Butanol, Ether, vorzugsweise niedere Dialkylether, wie Diethylether oder Dioxan, und deren Gemische.

Als Kondensationskatalysatoren für die wasserfreie Vorkondensation verwendet man wasserfreie Säuren und Basen. Als Säuren kommen insbesondere flüchtige Säuren, wie Halogenwasserstoffe oder Eisessig, die gegebenenfalls in einem der vorstehenden wasserfreien organischen Lösungsmittel gelöst sind, anorganische Säuren, wie Schwefelsäure, Aluminiumtrichlorid oder Bortrifluorid, oder organische Säuren, wie Ameisensäure, Essigsäure oder Propionsäure in Frage. Bei Verwendung von alkoholischen Lösungen flüchtiger Säuren, wie methanolischer 1 N HC1, kann die Gesamt-Katalysatorkonzentration z. B. bis zu 50 Molprozent betragen, wobei die Zugabe vorzugsweise in Einzelportionen erfolgt.

Als Basen kommen anorganische und organische Basen, wie Ammoniak, Natrium-, Kalium- oder Calciumhydroxid oder Trialkylamine, in Frage, wobei flüchtige Basen, wie Ammoniak oder Trialkylamine, besonders bevorzugt sind.

Die wasserfreie Vorkondensation wird üblicherweise bei Temperaturen von 20 bis 200 °C, vorzugsweise 50 bis 150 °C und insbesondere bei der Siedetemperatur des Lösungsmittels durchgeführt.

Gegebenenfalls kann man zunächst einen Teil einer, mehrerer oder aller Ausgangskomponenten vorkondensieren, dann die übrigen Ausgangskomponenten zumischen und anschließend hydrolytisch oder nicht-hydrolytisch cokondensieren.

Im allgemeinen wird die wasserfreie Vorkondensation soweit durchgeführt, daß das entstehende Vorkondensat noch flüssige Konsistenz hat.

Die anschließende hydrolytische Weiterkondensation des Vorkondensats, vorzugsweise der eingedampften Lösung des Vorkondensats, erfolgt vorzugsweise mit der den vorhandenen hydrolysierbaren Gruppen äquivalenten Wassermenge, gegebenenfalls unter Zusatz eines geeigneten Katalysators bei Temperaturen von 20 bis 100 °C, vorzugsweise 50 bis 90 °C und insbesondere 60 bis 80 °C. Geeignete Katalysatoren für die hydrolytische Weiterkondensation sind organische und anorganische Säuren und Basen, wie z. B. die für die wasserfreie Vorkondensation genannten Verbindungen, wobei flüchtige Säuren und Basen, wie Halogenwasserstoffe, Essigsäure, Ammoniak oder Triethylamin, besonders bevorzugt sind.

Nach beendeter Hydrolyse, die sich manchmal durch Auflösen der zähflüssigen bis festen Emulsion aus Vorkondensat und Wasser, gegebenenfalls beim Erwärmen, zeigt, wird das Lösungsmittel abgedampft. Dies erfolgt vorzugsweise soweit, daß der Rückstand gerade noch in eine Form, z. B. in ein Rohr oder eine Linsenform, umgegossen werden kann. Für diesen Zweck verwendete Gießformen bestehen z. B. aus einem temperaturbeständigen, nichtsilicatischen Material, vorzugsweise einem organischen Polymerwerkstoff, wie Polypropylen oder Polytetrafluorethylen.

Das Kondensat wird in der Gießform gegebenenfalls bei Temperaturen bis 150 °C, vorzugsweise 70 bis 130 °C und insbesondere 110 bis 130 °C, getrocknet und auskondensiert, wobei die Aushärtung des Kondensats innerhalb weniger Minuten bis zu 48 Stunden, vorzugsweise 30 Minuten bis 24 Stunden und insbesondere 1 bis 12 Stunden erfolgt.

In einer anderen Ausführungsform der Erfindung wird ein auf die vorstehend beschriebene Weise hydrolytisch weiterkondensiertes Kondensat, das zumindest noch zähflüssige Konsistenz hat und bei dem mindestens eine der verwendeten Ausgangskomponenten eine polymerisierbare Doppelbindung enthält, mit

(i) sich selbst oder

(ii) mindestens einem anderen zu wenigstens noch zähflüssiger Konsistenz weiter-kondensiertem Kondensat, bei dem mindestens eine der verwendeten Ausgangskomponenten eine polymerisierbare Doppelbindung enthält, oder

(iii) mindestens einem einfach ungesättigten, copolymerisierbaren Monomer, das mit dem Kondensat homogen mischbar oder darin löslich ist,

in Gegenwart eines Radikalbildners polymerisiert.

Die einfach ungesättigten, copolymerisierbaren Monomere (iii) haben vorzugsweise hydrophilen Charakter. Spezielle Beispiele sind (Meth)acrylsäure und deren Salze, vorzugsweise die Alkalimetallsalze, wie das Natriumsalz; (Meth)acrylsäureester, wie Methyl(meth)acrylat, Ethyl(meth)acrylat, Butyl(meth)acrylat, Cyclohexyl(meth)acrylat, Glycidyl(meth)acrylat, Ethylenglykolmono(meth)acrylat, Diethylenglykolmono(meth)acrylat, Triethylenglykolmono(meth)acrylat, Allyl(meth)acrylat, 2-Hydroxypropyl(meth)acrylat, 3-Hydroxypropyl(meth)acrylat, 2-Ethoxyethyl(meth)acrylat, 2-Dimethylaminoethyl(meth)acrylat und 3-Methoxy-2-hydroxypropyl(meth)acrylat; (Meth)acrylsäureamide, wie (Meth)acrylamid, N-Methylol(meth)acrylamid und Dimethyl(meth)acrylamid; Allylverbindungen, wie Allylalkohol und Allylglycidylether; N-Vinylpyrrolidon und Styrol. Unter diesen Monomeren sind Alkyl(meth)acrylsäureester, Alkoxyalkyl(meth)acrylsäureester und Hydroxyalkyl(meth)acrylsäureester mit 1 bis 6 Kohlenstoffatomen in der Alkyl- bzw. Alkoxygruppe sowie N-Vinylpyrrolidon besonders bevorzugt.

Vorstehend und auch in den Patentansprüchen werden unter der Bezeichnung « (Meth)acryl » sowohl Acrylsäureverbindungen als auch Methacrylsäureverbindungen verstanden.

Die Menge des einfach ungesättigten, copolymerisierbaren Monomers (iii) wird vorzugsweise so gewählt, daß das erhaltene Copolymerisat, bezogen auf die Gesamtmolzahl, mindestens 20 Molprozent, insbesondere mindestens 40 Molprozent, der eingesetzten Kieselsäureheterosäurepolykondensatkomponente enthält.

Gegebenenfalls kann man die Polymerisation bzw. Copolymerisation in Gegenwart einer oder mehrerer mehrfach ungesättigter Verbindungen (iv) als Vernetzungsmittel durchführen. Spezielle Beispiele für geeignete Vernetzungsmittel sind Ethylenglycoldi(meth)acrylat, Diethylenglykoldi(meth)acrylat, Triethylenglykoldi(meth)acrylat, Butylenglykoldi(meth)acrylat, Neopentylglykoldi(meth)acrylat, Pentaerythrittri(meth)acrylat, Pentaerythrittetra(meth)acrylat, Allyl(meth)acrylat, Trimethylolpropantri(meth)acrylat, Divinylbenzol und Diallylphthalat.

Die Menge des Vernetzungsmittels beträgt vorzugsweise 0,1 bis 10 Molprozent, insbesondere 0,1 bis 5 Molprozent, bezogen auf die Gesamtmolzahl des Copolymerisats.

Zur Polymerisation bzw. Copolymerisation werden die Ausgangskomponenten und ein Radikalbildner lösungsmittelfrei homogen vermischt und z. B. in eine der oben genannten Gießformen gegossen.

Beispiele für geeignete Radikalbildner sind organische Peroxide, z. B. Diacylperoxide, wie Benzoylperoxid und Lauroylperoxid; Ketoperoxide, wie Acetonperoxid und Cyclohexanonperoxid, Kohlenwasserstoffperoxide, wie tert.-Butylhydroperoxid, Cumolhydroperoxid und Dekahydronaphthalinhydroperoxid; Dikohlenwasserstoffperoxide, wie Di-tert.-butylperoxid und Dicumylperoxid; Perketale,

wie 1,1-Di-tert.-butylperoxy-3,3,5-trimethylcyclohexan ; Perester, wie tert.-Butylperbenzoat, tert.-Butylperoxyisopropylpercarbonat, tert.-Butylperpivalat, tert.-Butylperoctoat, tert.-Butylcyclohexylpercarbonat und tert.-Butylpermaleinat, sowie Acetylcyclohexansulfonylperoxid. Ebenfalls geeignet sind übliche Azoinitiatoren, wie Azobisisobutyronitril. Auch aktinische Strahlung, wie α-, β oder γ-Strahlen oder UV-Licht, kann als Radikalbildner verwendet werden.

Die Menge der chemischen Radikalbildner beträgt vorzugsweise 0,001 bis 5 Gewichtsprozent, bezogen auf das Gesamtgewicht der zu polymerisierenden Komponenten.

Dem Polymerisationssystem können gegebenenfalls auch Inhibitoren, wie Hydrochinonmonomethylether, zugesetzt werden.

Die Polymerisation bzw. Copolymerisation kann thermisch oder mit UV-Licht initiiert werden. Sie wird bei Temperaturen von Raumtemperatur bis 200 °C, vorzugsweise 50 bis 150 °C, bei Normaldruck, erhöhtem oder vermindertem Druck, z. B. einem Druck von 0,01 bis 20 bar, an der Luft oder in einer Inertatmosphäre durchgeführt.

Nach beendeter Polymerisation kann das Material auf ähnliche Weise wie das nach der ersten Ausführungsform erhaltene Kieselsäureheteropolykondensat weiter-verarbeitet werden.

Zur Herstellung von Kontaktlinsen kann man das in Form von zylindrischen Stangen anfallende Kondensat z. B. mit einer Diamantscheibe zu 4 bis 6 mm dicken Scheiben zersägen, die dann vorzugsweise nach dem spanabhebenden Drehverfahren, z. B. mit Diamanthobeln, zu Linsen verarbeitet werden können. Anschließend werden die Linsen vorzugsweise noch mit Diamantpulver, Aerosil oder Tonerde poliert. Statt Diamantwerkstoffen können auch andere übliche harte Werkstoffe wie Bornitride eingesetzt werden.

Die erfindungsgemäßen Kieselsäureheteropolykondensate eignen sich hervorragend zur Herstellung von Linsen für den kontaktoptischen Bereich (Kontaktlinsen und Intraokularlinsen). Es versteht sich, daß für diesen Anwendungsbereich die Ausgangskomponenten und anderen Reaktionspartner, z. B. die Kondensationskatalysatoren, so gewählt werden, daß das entstehende Kondensat physiologisch unbedenklich ist, d. h. keine toxischen Substanzen absondert oder Abwehrreaktionen und Reizungen hervorruft.

Die erfindungsgemäßen Kieselsäureheteropolykondensate haben im kontaktoptischen Bereich, d. h. bei der Verwendung in Form von Kontaktlinsen oder Intraokularlinsen oder als Bestandteile derartiger Linsen, insbesondere als Linsenkörpermaterial, unter anderem die folgenden Vorteile :

Sie weisen trotz ihrer geringen Wasseraufnahme eine hohe Sauerstoffpermeabilität auf ; die Sauerstoffpermeabilität ist somit keine Funktion des Wassergehaltes. Trotz der geringen Wasseraufnahmefähigkeit zeigen sie hydrophiles Verhalten, so daß keine zusätzliche Oberflächenhydrophilisierung erforderlich ist. Sie sind gut benetzbar und zwar im Gegensatz zur bekannten Oberflächenhydrophilisierung auch nach einer mechanischen Bearbeitung, denn der hydrophile Charakter ist nicht auf eine Oberflächenschicht beschränkt, sondern erstreckt sich über den gesamten Linsenkörner.

Ferner besitzen die erfindungsgemäßen Kieselsäureheteropolykondensate ausgezeichnete mechanische Eigenschaften, d. h. hohe mechanische Festigkeit und Formstabilität, gute Elastizität und hohe Oberflächenhärte (Mohs) von bis zu mehr als 4, so daß sie z. B. durch spanabhebende Drehverfahren sehr gut zu Linsen verarbeitbar sind. Aufgrund ihrer guten mechanischen Formstabilität eignen sie sich auch zur Korrektur von Sehfehlern. Gegenüber herkömmlichen Polymerwerkstoffen haben die erfindungsgemäßen Kieselsäureheteropolykondensate außerdem einen relativ hohen Brechungsindex (um etwa 1,5), so daß dünnere Linsen eingesetzt werden können.

Die erfindungsgemäßen Kieselsäureheteropolykondensate eignen sich auch außerhalb des Kontaktoptischen Bereichs z. B. zur Fertigung von optischen Linsen, Prismen und Kameralinsen. In diesen Anwendungsgebieten spielen die oben genannten physiologischen Kriterien naturgemäß keine Rolle.

Formkörper aus den erfindungsgemäßen Kieselsäureheteropolykondensaten können gegebenenfalls in üblicher Weise oberflächenvergütet oder mit speziellen Schichten versehen werden, z. B. mit Filterschichten oder reflektierenden Schichten. Außerdem können den Kieselsäureheteropolykondensaten gegebenenfalls herkömmliche Additive, z. B. Farbstoffe, zugesetzt werden.

Gegenstand der Erfindung sind auch Linsen, insbesondere Kontaktlinsen, die ganz oder teilweise aus einem erfindungsgemäßen Kieselsäureheteropolykondensat bestehen. Unter « teilweise » ist hierbei zu verstehen, daß das Kieselsäureheteropolykondensat z. B. als Teil des Linsenkörpers oder als Oberflächenbeschichtung von herkömmlichen Linsenmaterialien vorhanden ist.

Die folgenden Beispiele erläutern die Erfindung.

Beispiel 1

22,44 g (3-Glycidoxypropyl) trimethoxysilan und 1,14 g Tetraethyltitanat werden in 15 ml wasserfreiem Ethanol zum Rückfluß erhitzt. Die Lösung wird mit 2,5 ml wasserfreier methanolischer 1 N Salzsäure versetzt und 120 Minuten weiter unter Rückfluß erhitzt, wobei nach 30, 60 und 90 Minuten weitere 2,5 ml methanolische 1 N Salzsäure zugegeben werden. Die Lösung wird im Wasserstrahlvakuum bei 70 °C eingedampft und der Rückstand mit 7,2 ml Wasser versetzt. Es entsteht eine zähflüssige bis feste Emulsion, die sich nach wenigen Minuten unter Erwärmen zu einer klaren Lösung auflöst. Die Lösung wird im Wasserstrahlvakuum bei 70 °C soweit eingedampft, daß der zähflüssige Rückstand gerade noch

in ein Polypropylenrohr gegossen werden kann. Das Produkt wird 12 Stunden in dem Rohr bei 130 °C getrocknet, aus dem Rohr entnommen und mindestens weitere 24 Stunden bei 130 °C wärmebehandelt. Man erhält ein klares, hartes und kompaktes Material in Form einer zylindrischen Stange.

Das Material wird mit einer Diamantscheibe zu 5,0 mm dicken Scheiben zersägt, hierauf nach dem spanabhebendem Drehverfahren zu Linsen verarbeitet und schließlich mit Diamantpulver poliert. Die erhaltenen Linsen haben einen Brechungsindex von 1,495 und sind ausgezeichnet benetzbar.

Beispiel 2

22,44 g (3-Glycidoxypropyl) trimethoxysilan und 1,92 g Tetrabutylzirkonat werden in 15 ml Ethanol zum Rückfluß erhitzt. Die weitere Behandlung und Aufarbeitung erfolgt wie in Beispiel 1. Man erhält ein klares, hartes und kompaktes Material in Form eines Zylinders, das wie in Beispiel 1 zu Linsen verarbeitet wird. Die Linsen haben einen Brechungsindex von 1,499 und sind sehr gut benetzbar.

Beispiel 3

21,26 g (3-Glycidoxypropyl) trimethoxysilan, 0,74 g Dimethyldiethoxysilan und 1,14 g Tetraethyltitanat werden in 15 ml Ethanol zum Rückfluß erhitzt. Die Lösung wird wie in Beispiel 1 mit methanolischer Salzsäure behandelt und eingedampft. Das klare, flüssige Vorkondensat wird mit 7,0 ml Wasser versetzt. Es entsteht eine zähflüssige bis feste Emulsion, die sich nach wenigen Minuten, gegebenenfalls unter Erwärmen auf dem Wasserbad, zu einer klaren Lösung auflöst. Die weitere Aufarbeitung erfolgt wie in Beispiel 1. Man erhält ein klares, hartes und kompaktes Material in Form einer zylindrischen Stange, die wie in Beispiel 1 zu Linsen verarbeitet wird.

Beispiel 4

17,71 g (3-Glycidoxypropyl) trimethoxysilan und 1,14 g Tetraethyltitanat werden in 15 ml Ethanol zum Rückfluß erhitzt und mit 5,06 g Diphenyldichlorsilan versetzt. Die Lösung wird 120 Minuten weiter unter Rückfluß erhitzt, wobei nach 30, 60 und 90 Minuten jeweils 2,5 ml methanolische 1 N Salzsäure zugegeben werden. Die Lösung wird im Wasserstrahlvakuum eingedampft und der klare, flüssige Rückstand mit 6,5 ml Wasser versetzt. Es entsteht eine zähflüssige Emulsion, die sich nach wenigen Minuten, gegebenenfalls unter Erwärmen auf dem Wasserbad, zu einer trüben Lösung auflöst. Die weitere Aufarbeitung erfolgt wie in Beispiel 1. Das zähflüssige Kondensat ist zwar vor der Trocknung noch trüb, wird aber bei der Trocknung gemäß Beispiel 1 vollkommen klar. Man erhält ein gelbliches, kompaktes Material in Form einer zylindrischen Stange, die wie in Beispiel 1 zu Linsen verarbeitet wird.

Beispiel 5

15,35 g (3-Glycidoxypropyl) trimethoxysilan, 7,44 g (3-Methacryloxypropyl) trimethoxysilan und 1,14 g Tetraethyltitanat werden in 15 ml Ethanol zum Rückfluß erhitzt. Die gelbe Lösung wird wie in Beispiel 1 mit methanolischer Salzsäure behandelt und eingedampft. Das klare, flüssige Vorkondensat wird mit 6,7 ml Wasser versetzt. Es entsteht eine zähflüssige bis feste Emulsion, die sich nach wenigen Minuten, gegebenenfalls unter Erwärmen auf dem Wasserbad, zu einer klaren, gelben Lösung auflöst. Die weitere Aufarbeitung erfolgt wie in Beispiel 1. Man erhält ein klares, gelbes, hartes und kompaktes Material in Form einer zylindrischen Stange, die wie in Beispiel 1 zu Linsen verarbeitet wird.

Beispiel 6

Die klare gelbe Lösung von Beispiel 5, die bei der Behandlung des Vorkondensats mit Wasser entsteht, wird im Wasserstrahlvakuum bei 70 °C soweit eingedampft, daß der zähflüssige Rückstand noch mit 0,05 g tert.-Butylperbenzoat homogen verrührt werden kann. Diese Mischung wird in ein Polypropylenrohr gegossen und im Laufe von 12 h auf 130 °C erhitzt. Das klare und kompakte Produkt wird aus dem Rohr genommen und weitere 24 h bei 130 °C wärmebehandelt. Man erhält ein gelbliches hartes und kompaktes Material in Form einer zylindrischen Stange, das wie in Beispiel 1 zu Linsen verarbeitet wird, wobei man jedoch als Poliermittel Tonerde verwendet.

Beispiele 7-14

21,26 g (3-Glycidoxypropyl)-trimethoxysilan, 1,24 g (3-Methacryloxypropyl)-trimethoxysilan und 1,14 g Tetraethyltitanat werden in 15 ml Ethanol zum Rückfluß erhitzt. Diese Lösung wird wie in Beispiel 1 mit methanolischer Salzsäure behandelt und eingedampft. Das klare, flüssige Vorkondensat wird wie in Beispiel 1 mit 7,1 ml Wasser behandelt.

Die resultierende klare Lösung wird im Wasserstrahlvakuum bei 70 °C soweit eingedampft, daß der klare, zähflüssige Rückstand mit den in der Tabelle angegebenen Mengen 2-Hydroxyethylmethacrylat (HEMA) oder Methylmethacrylat, (MMA) oder 1-Vinyl-2-pyrrolidon (VP) oder Allylglycidylether (AGE) und

gegebenenfalls 2-Ethyl-2-(hydroxymethyl)-1,3-propandiol-trimethacrylat (TRIMA) sowie mit den in der Tabelle angegebenen Mengen tert.-Butylperbenzoat gerade noch zu einer homogenen Mischung verrührt werden kann. Diese Mischungen werden in Polypropylenrohre gegossen und im dicht verschlossenen Rohr innerhalb 12 h auf 130 °C erhitzt. Die klaren und kompakten Produkte werden aus dem Rohr genommen und weitere 24 h bei 130 °C wärmebehandelt. Man erhält farblose bis gelbliche, homogene und massive Materialien in Form zylindrischer Stangen, die wie in Beispiel 6 zu Linsen verarbeitet werden.

Tabelle

| Bsp.Nr. | Comonomer (g) | | | | | tBu-perbenzoat (g) |
|---|---|---|---|---|---|---|
| | HEMA | MMA | VP | AGE | TRIMA | |
| 7 | 5,60 | | | | | 0,05 |
| 8 | | 4,30 | | | | 0,05 |
| 9 | | | 4,78 | | | 0,05 |
| 10 | | | | 4,91 | | 0,05 |
| 11 | 3,12 | | | | 0,34 | 0,03 |
| 12 | 12,36 | | | | 1,69 | 0,08 |
| 13 | | 2,40 | | | 0,34 | 0,03 |
| 14 | | 6,41 | | | 1,02 | 0,07 |

Beispiel 15

22,36 g Diethoxy-(3-glycidoxypropyl)-methylsilan, 1,24 g (3-Methacryloxypropyl)-trimethoxysilan und 1,14 g Tetraethyltitanat werden in 15 ml zum Rückfluß erhitzt und wie in Beispiel 1 mit methanolischer Salzsäure vorkondensiert und das klare flüssige Vorkondensat mit 5,5 ml Wasser behandelt. Die resultierende klare Lösung wird im Wasserstrahlvakuum bei 70 °C eingedampft. Der dickflüssige Rückstand wird mit 12,36 g HEMA, 1,69 g TRIMA und 0,08 g tert.-Butylperbenzoat homogen verrührt, diese Mischung wie in den Beispielen 7-14 in einem Polypropylenrohr polymeriert und auskondensiert. Man erhält ein klares, homogenes und kompaktes Material in Form einer zylindrischen Stange.

Beispiel 16

14,17 g (3-Glycidoxypropyl)-trimethoxysilan, 7,45 g Diethoxy-(3-glycidoxypropyl)-methylsilan, 1,24 g (3-Methacryloxypropyl)-trimethoxysilan und 1,14 g Tetraethyltitanat werden wie in Beispiel 1 in 15 ml Ethanol mit methanolischer Salzsäure vorkondensiert und das klare, flüssige Vorkondensat mit 6,6 ml Wasser behandelt. Die resultierende klare Lösung wird im Wasserstrahlvakuum bei 70 °C soweit eingedampft, daß der klare zähflüssige Rückstand mit 5,34 g HEMA, 0,68 g TRIMA und 0,05 g tert.-Butylperbenzoat homogen verrührt werden klann. Diese Mischung wird wie in den Beispielen 7-14 in einem Polypropylenrohr polymerisiert und auskondensiert. Man erhält ein gelbliches homogenes und massives Material in Form einer zylindrischen Stange, die wie in Beispiel 6 zu Linsen verarbeitet wird.

**Patentansprüche** (für die Vertragsstaaten : CH, DE, FR, GB, IT, LI)

1. Kieselsäureheteropolykondensate, dadurch erhältlich, daß man

a) mindestens eine im Reaktionsmedium lösliche Titan- oder Zirkonverbindung der Formel I

$$MR_4 \qquad (I)$$

in der M Titan oder Zirkon bedeutet und R Halogen, Hydroxy, Alkoxy oder einen Chelatliganden darstellt ;
b) mindestens ein organofunktionelles Silan der Formel II

$$R_m'' (R''' Y)_n SiX_{(4-m-n)} \quad (II)$$

in der R″ Alkyl, Alkenyl, Aryl, Arylalkyl, Alkylaryl, Arylalkenyl oder Alkenylaryl bedeutet, R‴ Alkylen, Phenylen, Alkylenphenylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe —$NR_2'$ (R′ = Wasserstoff und/oder Alkyl) bedeutet, Y ein hydrophiler Rest oder ein Rest ist, der unter den Reaktionsbedingungen in einen hydrophilen Rest umgewandelt wird, m den Wert 0, 1 oder 2 und n den Wert 1, 2 oder 3 haben, wobei m + n den Wert 1, 2 oder 3 hat ; und gegebenenfalls eine oder mehrere der folgenden Komponenten c) und/oder d) :

c) Organosilane der Formel III

$$R_n'' SiX_{4-n} \quad (III)$$

in der R″, X und n die vorstehende Bedeutung haben,

d) im Reaktionsmedium lösliche, schwerflüchtige Oxide eines Elementes der Hauptgruppen Ia bis Va oder der Nebengruppen IVb oder Vb des Periodensystems, mit Ausnahme von Titan und Zirkon, oder im Reaktionsmedium lösliche, unter den Reaktionsbedingungen ein schwer-flüchtiges Oxid bildende Verbindungen eines dieser Elemente ;

in Abwesenheit von Wasser, gegebenenfalls in Gegenwart eines wasserfreien Kondensationskatalysators und gegebenenfalls in Anwesenheit eines wasserfreien Lösungsmittels vorkondensiert und anschließend durch Zugabe von Wasser sowie gegebenenfalls eines Kondensationskatalysators weiterkondensiert, wobei 1 bis 60 Molprozent der Komponente a), 20 bis 99 Molprozent der Komponente b), 0 bis 40 Molprozent der Komponente c) und 0 bis 50 Molprozent der Komponente d) verwendet werden und die Gesamtmolzahl der Komponenten a), b), c) und d) 100 Prozent beträgt.

2. Kieselsäureheteropolykondensate nach Anspruch 1, dadurch gekennzeichnet, daß zu ihrer Herstellung, bezogen auf die Gesamtmolzahl der Ausgangskomponenten, 2 bis 30 Molprozent, vorzugsweise 5 bis 20 Molprozent, der Komponente a), 50 bis 99 Molprozent, vorzugsweise 60 bis 95 Molprozent, der Komponente b), höchstens 30 Molprozent der Komponente c) und höchstens 30 Molprozent der Komponente d) verwendet worden sind.

3. Kieselsäureheteropolykondensat nach Anspruch 1 oder 2, dadurch gekennzeichnet, daß die Vorkondensation in Gegenwart eines sauren oder basischen Kondensationskatalysators durchgeführt worden ist.

4. Kieselsäureheteropolykondensate nach einem der Ansprüche 1 bis 3, dadurch gekennzeichnet, daß die Weiterkondensation in Gegenwart eines sauren oder basischen Kondensationskatalysators durchgeführt worden ist.

5. Kieselsäureheteropolykondensate nach einem der Ansprüche 1 bis 4, dadurch gekennzeichnet, daß das weiterkondensierte Kieselsäureheteropolykondensat durch Wärmebehandlung bei einer Temperatur bis 150 °C, vorzugsweise 70 bis 130 °C, auskondensiert worden ist.

6. Kieselsäureheteropolykondensate, dadurch erhältlich, daß man ein gemäß einem der Ansprüche 1 bis 4 zu zumindest noch zähflüssiger Konsistenz weiter-kondensiertes Kondensat, bei dem mindestens eine Ausgangskomponente eine polymerisierbare Doppelbindung enthält, mit

i) sich selbst oder

ii) mindestens einem anderen gemäß einem der Ansprüche 1 bis 4 zu zumindest noch zähflüssiger Konsistenz weiterkondensiertem Kondensat, bei dem mindestens eine Ausgangskomponente eine polymerisierbare Doppelbindung enthält, oder

iii) mindestens einem einfach ungesättigten, copolymerisierbaren Monomer, das mit dem Kondensat homogen mischbar oder darin löslich ist,

in Gegenwart eines Radikalbildners polymerisiert.

7. Kieselsäureheteropolykondensate nach Anspruch 6, dadurch gekennzeichnet, daß das einfach ungesättigte, copolymerisierbare Monomer (iii) ausgewählt ist unter (Meth)acrylsäure oder deren Salzen, (Meth)acrylsäureestern, (Meth)acrylsäureamiden, Allylverbindungen, N-Vinylpyrrolidon und/oder Styrol.

8. Kieselsäureheteropolykondensate nach Anspruch 6 oder 7, dadurch gekennzeichnet, daß die Polymerisation zusätzlich in Gegenwart (iv) mindestens einer mehrfach ungesättigten Verbindung als Vernetzungsmittel durchgeführt worden ist.

9. Kieselsäureheteropolykondensate nach Anspruch 8, dadurch gekennzeichnet, daß das Vernetzungsmittel (iv) ausgewählt ist unter Ethylenglykoldi(meth)acrylat, Diethylenglykoldi(meth)acrylat, Triethylenglykoldi(meth)acrylat, Butylenglykoldi(meth)acrylat, Neopentylglykoldi(meth)acrylat, Pentaerythrittri(meth)acrylat, Pentaerythrittetra(meth)acrylat, Allyl(meth)acrylat, Trimethylolpropantri(meth)acrylat, Divinylbenzol und/oder Diallylphthalat.

10. Verwendung der Kieselsäureheteropolykondensate nach einem der Ansprüche 1 bis 9 für optische Zwecke, z. B. in Form von Linsen, insbesondere Kontaktlinsen, oder als Bestandteile derartiger Linsen.

11. Linsen, insbesondere Kontaktlinsen, die ganz oder teilweise aus einem Kieselsäureheteropolykondensat nach einem der Ansprüche 1 bis 9 bestehen.

**Patentansprüche** (für den Vertragsstaat AT)

1. Verfahren zur Herstellung von Kieselsäureheteropolykondensaten, dadurch gekennzeichnet, daß man

a) mindestens eine im Reaktionsmedium lösliche Titan- oder Zirkonverbindung der Formel I

$$MR_4 \qquad (I)$$

in der M Titan oder Zirkon bedeutet und R Halogen, Hydroxy, Alkoxy, Acyloxy oder einen Chelatliganden darstellt ;

b) mindestens ein organofunktionelles Silan der Formel II

$$R_m'' (R'''Y)_n SiX_{(4-m-n)} \qquad (II)$$

in der R″ Alkyl, Alkenyl, Aryl, Arylalkyl, Alkylaryl, Arylalkenyl oder Alkenylaryl bedeutet, R‴ Alkylen, Phenylen, Alkylenphenylen oder Alkenylen darstellt, wobei diese Reste durch Sauerstoff- oder Schwefelatome oder —NH-Gruppen unterbrochen sein können, X Wasserstoff, Halogen, Hydroxy, Alkoxy, Acyloxy oder die Gruppe $—NR_2'$ (R′ = Wasserstoff und/oder Alkyl) bedeutet, Y ein hydrophiler Rest oder ein Rest ist, der unter den Reaktionsbedingungen in eine hydrophilen Rest umgewandelt wird, m den Wert 0, 1 oder 2 und n den Wert 1, 2 oder 3 haben, wobei m + n den Wert 1, 2 oder 3 hat ; und gegebenenfalls eine oder mehrere der folgenden Komponenten c) und/oder d) :

c) Organosilane der Formel III

$$R_n'' SiX_{4-n} \qquad (III)$$

in der R″, X und n die vorstehende Bedeutung haben,

d) im Reaktionsmedium lösliche, schwerflüchtige Oxide eines Elementes der Hauptgruppen Ia bis Va oder der Nebengruppen IVb oder Vb des Periodensystems, mit Ausnahme von Titan und Zirkon, oder im Reaktionsmedium lösliche, unter den Reaktionsbedingungen ein schwer-flüchtiges Oxid bildende Verbindungen eines dieser Elemente ;

in Abwesenheit von Wasser, gegebenenfalls in Gegenwart eines wasserfreien Kondensationskatalysators und gegebenenfalls in Anwesenheit eines wasserfreien Lösungsmittels vorkondensiert und anschließend durch Zugabe von Wasser sowie gegebenenfalls eines Kondensationskatalysators weiterkondensiert, wobei 1 bis 60 Molprozent der Komponente a), 20 bis 99 Molprozent der Komponente b), 0 bis 40 Molprozent der Komponente c) und 0 bis 50 Molprozent der Komponente d) verwendet werden und die Gesamtmolzahl der Komponenten a), b), c) und d) 100 Prozent beträgt.

2. Verfahren nach Anspruch 1, dadurch gekennzeichnet, daß, bezogen auf die Gesamtmolzahl der Ausgangskomponenten, 2 bis 30 Molprozent, vorzugsweise 5 bis 20 Molprozent, der Komponente a), 50 bis 99 Molprozent, vorzugsweise 60 bis 95 Molprozent, der Komponente b), höchstens 30 Molprozent der Komponente c) und höchstens 30 Molprozent der Komponente d) verwendet werden.

3. Verfahren nach Anspruch 1 oder 2, dadurch gekennzeichnet, daß die Vorkondensation in Gegenwart eines sauren oder basischen Kondensationskatalysators durchgeführt wird.

4. Verfahren nach einem der Ansprüche 1 bis 3, dadurch gekennzeichnet, daß die Weiterkondensation in Gegenwart eines sauren oder basischen Kondensationskatalysators durchgeführt wird.

5. Verfahren nach einem der Ansprüche 1 bis 4, dadurch gekennzeichnet, daß das weiterkondensierte Kieselsäureheteropolykondensat durch Wärmebehandlung bei einer Temperatur bis 150 °C, vorzugsweise 70 bis 130 °C, auskondensiert wird.

6. Verfahren nach einem der Ansprüche 1 bis 4, dadurch gekennzeichnet, daß man ein zumindest noch zähflüssige Konsistenz aufweisendes weiterkondensiertes Kondensat, bei dem mindestens eine Ausgangskomponente eine polymerisierbare Doppelbindung enthält, mit

i) sich selbst oder

ii) mindestens einem anderen gemäß einem der Ansprüche 1 bis 4 zu zumindest noch zähflüssiger Konsistenz weiterkondensiertem Kondensat, bei dem mindestens eine Ausgangskomponente eine polymerisierbare Doppelbindung enthält, oder

iii) mindestens einem einfach ungesättigten, copolymerisierbaren Monomer, das mit dem Kondensat homogen mischbar oder darin löslich ist,

in Gegenwart eines Radikalbildners polymerisiert.

7. Verfahren nach Anspruch 6, dadurch gekennzeichnet, daß das einfach ungesättigte, copolymerisierbare Monomer (iii) ausgewählt ist unter (Meth)acrylsäure oder deren Salzen, (Meth)acrylsäureestern, (Meth)acrylsäureamiden, Allylverbindungen, N-Vinylpyrrolidon und/oder Styrol.

8. Verfahren nach Anspruch 6 oder 7, dadurch gekennzeichnet, daß die Polymerisation zusätzlich in Gegenwart (iv) mindestens einer mehrfach ungesättigten Verbindung als Vernetzungsmittel durchgeführt wird.

9. Verfahren nach Anspruch 8, dadurch gekennzeichnet, daß das Vernetzungsmittel (iv) ausgewählt ist unter Ethylenglykoldi(meth)acrylat, Diethylenglykoldi(meth)acrylat, Triethylenglykoldi(meth)acrylat, Butylenglykoldi(meth)acrylat, Neopentylglykoldi(meth)acrylat, Pentaerythrittri(meth)acrylat, Pentaerythrittetra(meth)acrylat, Allyl(meth)acrylat, Trimethylolpropantri(meth)acrylat, Divinylbenzol und/oder Diallylphthalat.

10. Verwendung der nach dem Verfahren eines der Ansprüche 1 bis 9 hergestellten Kieselsäureheteropolykondensate für optische Zwecke, z. B. in Form von Linsen, insbesondere Kontaktlinsen, oder als Bestandteile derartiger Linsen.

11. Linsen, insbesondere Kontaktlinsen, die ganz oder teilweise aus einem nach dem Verfahren eines der Ansprüche 1 bis 9 hergestellten Kieselsäureheteropolykondensat bestehen.

**Claims** (for the Contracting States : CH, DE, FR, GB, IT, LI)

1. Silicic acid heteropolycondensates, obtainable in that

a) at least one titanium or zirconium component, soluble in the reaction medium, of formula I

$$MR_4 \qquad (I)$$

wherein M is titanium or zirconium and R is halogen, hydroxy, alkoxy, acyloxy or a chelate ligand, and

b) at least one organofunctional silane of formula II

$$R_m'' (R'''Y)_n SiX_{(4-m-n)} \qquad (II)$$

wherein R″ is alkyl, alkenyl, aryl, arylalkyl, alkylaryl, arylalkenyl or alkenylaryl, R‴ is alkylene, phenylene, alkylenephenylene or alkenylene, whereby these radicals may be interrupted by oxygen or sulphur atoms or —NH-groups, X is hydrogen, halogen, hydroxy, alkoxy, acyloxy or the group $—NR_2''$ (R′ = hydrogen and/or alkyl), Y is a hydrophilic radical or a radical that is converted to a hydrophilic radical under the reaction conditions, m is an integer of 0, 1 or 2 and n is an integer of 1, 2 or 3, m + n having the value 1, 2 or 3 ; and, optionally, one or more of the following components c) and/or d) :

c) organosilanes of formula III

$$R_n'' SiX_{4-n} \qquad (III)$$

wherein R″, X and n have the above meanings,

d) oxides of an element of the main groups Ia to Va or the subsidiary groups IVb or Vb of the periodic system, with the exception of titanium or zirconium, which oxides are substantially involatile and soluble in the reaction medium ; or compounds of one of said elements which are soluble in the reaction medium and form a substantially involatile oxide under the reaction conditions ;

are pre-condensed in the absence of water, optionally in the presence of an anhydrous condensation catalyst and, optionally, in the presence of an anhydrous solvent and, subsequently, are further condensed by adding water as well as, optionally, a condensation catalyst, whereby 1 to 60 moles % of component a), 20 to 99 moles % of component b), 0 to 40 moles % of component c) and 0 to 50 moles % of component d) are employed and the total mole number of components a), b), c) and d) is 100 percent.

2. Silicic acid heteropolycondensates according to claim 1, characterized in that, based on the total mole number of the starting components, 2 to 30 moles %, preferably 5 to 20 moles percent, of component a), 50 to 99 moles %, preferably 60 to 95 moles % of component b), up to 30 moles % of component c) and up to 30 moles % of component d) are employed for their production.

3. Silicic acid heteropolycondensates according to claim 1 or 2, characterized in that pre-condensation is carried out in the presence of an acidic or basic condensation catalyst.

4. Silicic acid heteropolycondensates according to any one of claims 1 to 3, characterized in that the further condensation is carried out in the presence of an acidic or basic condensation catalyst.

5. Silicic acid heteropolycondensates according to any one of claims 1 to 4, characterized in that the silicic acid heteropolycondensate which has been further condensed is completely condensed by heat treatment at a temperature of up to 150 °C, preferably 70 to 130 °C.

6. Silicic acid heteropolycondensates, obtainable in that a condensate which has been further condensed in accordance with any one of claims 1 to 4 and still has at least viscous consistency, and wherein at least one of the starting components contains a polymerizable double bond is polymerized in the presence of a free radical-forming agent

i) with itself or

ii) at least another condensate which has been further condensed in accordance with any one of claims 1 to 4 and still has at least viscous consistency, and wherein at least one of the starting

components contains a polymerizable double bond, or

iii) at least one mono-unsaturated, copolymerisable monomer that is homogeneously miscible with the condensate or soluble therein.

7. Silicic acid heteropolycondensates according to claim 6, characterized in that the mono-unsaturated copolymerisable monomer (iii) is selected from (meth)acrylic acid or its salts, (meth)acrylic acid esters, (meth)acrylic acid amides, allyl compounds, N-vinylpyrrolidone and/or styrene.

8. Silicic acid heteropolycondensates according to claim 6 or 7, characterized in that the polymerisation has been carried out in the additional presence of (iv) at least one poly-unsaturated compound serving as cross-linking agent.

9. Silicic acid heteropolycondensate according to claim 8, characterized in that the cross-linking agent (iv) is selected from ethylene glycol (meth)acrylate, diethylenglycol di(meth)acrylate, triethyleneglycol di(meth)acrylate, butyleneglycol di(meth)acrylate, neopentylglycol di(meth)acrylate, pentaerythritol tri(meth)acrylate, pentaerythritol tetra(meth)acrylate, allyl (meth)acrylate, trimethylolpropane tri(meth)acrylate, divinylbenzene and/or diallylphthalate.

10. Use of the silicic acid heteropolycondensates according to any one of claims 1 to 9 for optical purposes, for example, in the form of lenses, in particular contact lenses, or as components of such lenses.

11. Lenses, in particular contact lenses, wholly or partly consisting of a silicic acid heteropolycondensate according to any one of claims 1 to 9.

**Claims** (for the Contracting State AT)

1. A process for preparing silicic acid heteropolycondensates, characterized in that

a) at least one titanium or zirconium component, soluble in the reaction medium, of formula I

$$MR_4 \qquad (I)$$

wherein M is titanium or zirconium and R is halogen, hydroxy, alkoxy, acyloxy or a chelate ligand, and

b) at least one organofunctional silane of formula II

$$R_m'' (R'''Y)_n \, SiX_{(4-m-n)} \qquad (II)$$

wherein R'' is alkyl, alkenyl, aryl, arylalkyl, alkylaryl, arylalkenyl or alkenylaryl, R''' is alkylene, phenylene, alkylenephenylene or alkenylene, whereby these radicals may be interrupted by oxygen or sulphur atoms or —NH-groups, X is hydrogen, halogen, hydroxy, alkoxy, acyloxy or the group $—NR_2'$ (R' = hydrogen and/or alkyl), Y is a hydrophilic radical or a radical that is converted to a hydrophilic radical under the reaction conditions, m is an integer of 0, 1 or 2 and n is an integer of 1, 2 or 3, m + n having the value 1, 2 or 3 ; and, optionally, one or more of the following components c) and/or d) :

c) organosilanes of formula III

$$R_n'' \, SiX_{4-n} \qquad (III)$$

wherein R'', X and n have the above meanings,

d) oxides of an element of the main groups Ia to Va or the subsidiary groups IVb or Vb of the periodic system, with the exception of titanium or zirconium, which oxides are substantially involatile and soluble in the reaction medium ; or compounds of one of said elements which are soluble in the reaction medium and form a substantially involatile oxide under the reaction conditions ;

are pre-condensed in the absence of water, optionally in the presence of an anhydrous condensation catalyst and, optionally, in the presence of an anhydrous solvent and, subsequently, are further condensed by adding water as well as, optionally, a condensation catalyst, whereby 1 to 60 moles % of component a), 20 to 99 moles % of component b), 0 to 40 moles % of component c) and 0 to 50 moles % of component d) are employed and the total mole number of components a), b), c) and d) is 100 percent.

2. A process according to claim 1, characterized in that, based on the total mole number of the starting components, 2 to 30 moles %, preferably 5 to 20 moles percent, of component a), 50 to 99 moles %, preferably 60 to 95 moles % of component b), up to 30 moles % of component c) and up to 30 moles % of component d) are employed.

3. A process according to claim 1 or 2, characterized in that pre-condensation is carried out in the presence of an acidic or basic condensation catalyst.

4. A process according to any one of claims 1 to 3, characterized in that the further condensation is carried out in the presence of an acidic or basic condensation catalyst.

5. A process according to any one of claims 1 to 4, characterized in that the silicic acid heteropolycondensate which has been further condensed is completely condensed by heat treatment at a

temperature of up to 150 °C, preferably 70 to 130 °C.

6. A process according to any one of claims 1 to 4, characterized in that a condensate which has been further condensed and still has at least viscous consistency, and wherein at least one of the starting components contains a polymerizable double bond is polymerized in the presence of a free radical-forming agent

i) with itself or

ii) at least another condensate which has been further condensed in accordance with any one of claims 1 to 4 and still has at least viscous consistency, and wherein at least one of the starting components contains a polymerizable double bond, or

iii) at least one mono-unsaturated, copolymerisable monomer that is homogeneously miscible with the condensate or soluble therein.

7. A process according to claim 6, characterized in that the mono-unsaturated copolymerisable monomer (iii) is selected from (meth)acrylic acid or its salts, (meth)acrylic acid esters, (meth)acrylic acid amides, allyl compounds, N-vinylpyrrolidone and/or styrene.

8. A process according to claim 6 or 7, characterized in that the polymerisation is carried out in the additional presence of (iv) at least one poly-unsaturated compound serving as cross-linking agent.

9. A process according to claim 8, characterized in that the cross-linking agent (iv) is selected from ethylene glycol (meth)acrylate, diethylenglycol di(meth)acrylate, triethyleneglycol di(meth)acrylate, butyleneglycol di(meth)acrylate, neopentylglycol di(meth)acrylate, pentaerythritol tri(meth)acrylate, pentaerythritol tetra(meth)acrylate, allyl (meth)acrylate, trimethylolpropane tri(meth)acrylate, divinylbenzene and/or diallylphthalate.

10. Use of the silicic acid heteropolycondensates produced by the process of any one of claims 1 to 9 for optical purposes, for example, in the form of lenses, in particular contact lenses, or as components of such lenses.

11. Lenses, in particular contact lenses, wholly or partly consisting of a silicic acid heteropolycondensate produced by the process of any one of claims 1 to 9.

**Revendications** (pour les Etats contractants : CH, DE, FR, GB, IT, LI)

1. Hétéropolycondensats d'acide silicique, que l'on peut obtenir en soumettant :

a) au moins un composé de titane ou de zirconium, soluble dans le milieu de réaction, de formule I :

$$MR_4 \qquad (I)$$

dans laquelle M signifie le titane ou le zirconium et R représente un atome d'halogène, un groupe hydroxy, alcoxy, acyloxy ou un ligand de formation de chélate ;

b) au moins un silane organofonctionnel de formule II

$$R_m'' (R'''Y)_n SiX_{(4-m-n)} \qquad (II)$$

dans laquelle R″ désigne un groupe alkyle, alcényle, aryle, arylalkyle, alkylaryle, arylalcényle ou alcénylaryle, R‴ représente un groupe alkylène, phénylène, alkylènephénylène ou alcénylène, ces restes pouvant être interrompus par des atomes d'oxygène ou de soufre ou par des groupes —NH-, X représente un atome d'hydrogène ou d'halogène ou un groupe hydroxy, alcoxy, acyloxy ou le groupe $—NR_2'$ (R′ représentant un atome d'hydrogène et/ou un groupe alkyle), Y représente un reste hydrophile ou un reste qui est transformé en un reste hydrophile dans les conditions de réaction, m vaut 0, 1 ou 2 et n vaut 1, 2 ou 3, la somme (m + n) valant 1, 2 ou 3 ; et éventuellement un ou plusieurs des composants (c) et/ou (d) suivants :

c) des organosilanes de formule III :

$$R_n'' SiX_{4-n} \qquad (III)$$

dans laquelle R″, X et n ont le sens précité,

d) des oxydes, solubles dans le milieu de réaction, peu volatils, d'un élément des groupes principaux Ia à Va ou des sous-groupes IVb ou Vb du système périodique, à l'exclusion du titane et du zirconium, ou des composés d'un de ces éléments formant des oxydes solubles dans le milieu de réaction, peu volatils dans les conditions de réaction,

à une précondensation en l'absence d'eau, éventuellement en présence d'un catalyseur de condensation anhydre et éventuellement en présence d'un solvant anhydre puis, par addition d'eau et éventuellement d'un catalyseur de condensation, à une poursuite de la condensation, en utilisant 1 à 60 moles % du composant a), 20 à 99 moles % du composant b), 0 à 40 moles % du composant c) et 0 à 50 moles % du

composant d), et le nombre total des moles des composants a), b), c) et d) formant 100 %.

2. Hétéropolycondensats de l'acide silicique selon la revendication 1, caractérisés en ce que pour leur préparation, on a utilisé, par rapport au nombre total de moles des composants de départ, 2 à 30 moles %, avantageusement 5 à 20 moles %, du composant a), 50 à 99 moles %, avantageusement 60 à 95 moles %, du composant b), au maximum 30 moles % du composant c) et au maximum 30 moles % du composant d).

3. Hétéropolycondensat d'acide silicique selon la revendication 1 ou 2, caractérisé en ce que la précondensation a été conduite en présence d'un catalysateur acide ou basique de condensation.

4. Hétéropolycondensats d'acide silicique selon l'une des revendications 1 à 3, caractérisés en ce que la poursuite de la condensation a été conduite en présence d'un catalyseur acide ou basique de condensation.

5. Hétéropolycondensats d'acide silicique selon l'une des revendications 1 à 4, caractérisés en ce que l'hétéropolycondensat d'acide silicique ayant subi une poursuite de condensation a été soumis à achèvement de condensation par traitement thermique à une température allant jusqu'à 150 °C, avantageusement une température de 70 à 130 °C.

6. Hétéropolycondensats d'acide silicique, que l'on peut obtenir en polymérisant, en présence d'un générateur de radicaux libres, un condensat ayant subi une poursuite de condensation selon l'une des revendications 1 à 4 jusqu'à une consistance encore visqueuse, dans lequel au moins un composant de départ contient une double liaison polymérisable, avec,

i) lui-même, ou

ii) au moins un autre condensat ayant subi une poursuite de condensation selon l'une des revendications 1 à 4 jusqu'à au moins une consistance encore plus visqueuse, dans lequel au moins un composant de départ contient une double liaison polymérisable, ou

iii) au moins un monomère à insaturation simple, copolymérisable, qui est miscible au condensat ou y est soluble.

7. Hétéropolycondensats d'acide silicique selon la revendication 6, caractérisés en ce que le monomère à insaturation simple, copolymérisable (iii) est choisi parmi l'acide (meth)acrylique et ses sels, des esters de l'acide (meth)acrylique, des amides de l'acide (meth)acrylique, des composés allyliques, la N-vinylpyrrolidone et/ou le styrène.

8. Hétéropolycondensats d'acide silicique selon la revendication 6 ou 7, caractérisés en ce que la polymérisation a été conduite en outre en présence de (iv) au moins un composé à insaturation multiple jouant le rôle d'agent de réticulation.

9. Hétéropolycondensats d'acide silicique selon la revendication 8, caractérisés en ce que l'agent de réticulation (iv) a été choisi parmi du di(meth)acrylate d'éthylèneglycol, du di(meth)acrylate de diéthylèneglycol, du di(meth)acrylate de triéthylèneglycol, du di(meth)acrylate de butylèneglycol, du di(meth)acrylate de néopentylglycol, du tri(meth)acrylate de pentaérythritol, du tétra(meth)acrylate de pentaérythritol, le (meth)acrylate d'allyle, le tri(meth)acrylate de triméthylolpropane, le divinylbenzène et/ou le phtalate de diallyle.

10. Utilisation des hétéropolycondensats d'acide silicique selon l'une des revendications 1 à 9 à des fins optiques, par exemple sous forme de lentilles, en particulier des lentilles de contact, ou comme constituants de telles lentilles.

11. Lentille, en particulier lentille de contact, qui consiste entièrement ou en partie en un hétéropolycondensat d'acide silicique selon l'une des revendications 1 à 9.

**Revendications** (pour l'Etat contractant AT)

1. Procédé de préparation d'hétéropolycondensats d'acide silicique, caractérisé en ce qu'on soumet :

a) au moins un composé de titane ou de zirconium, soluble dans le milieu de réaction, de formule I :

$$MR_4 \qquad (I)$$

dans laquelle M signifie le titane ou le zirconium et R représente un atome d'halogène, un groupe hydroxy, alcoxy, acyloxy ou un ligand de formation de chélate ;

b) au moins un silane organofonctionnel de formule II

$$R_m'' (R'''Y)_n SiX_{(4-m-n)} \qquad (II)$$

dans laquelle R″ désigne un groupe alkyle, alcényle, aryle, arylalkyle, alkylaryle, arylalcényle ou alcénylaryle, R‴ représente un groupe alkylène, phénylène, alkylènephénylène ou alcénylène, ces restes pouvant être interrompus par des atomes d'oxygène ou de soufre ou par des groupes —NH-, X représente un atome d'hydrogène ou d'halogène ou un groupe hydroxy, alcoxy, acyloxy ou le groupe —$NR_2'$ (R'

représentant un atome d'hydrogène et/ou un groupe alkyle), Y représente un reste hydrophile ou un reste qui est transformé en un reste hydrophile dans les conditions de réaction, m vaut 0, 1 ou 2 et n vaut 1, 2 ou 3, la somme (m + n) valant 1, 2 ou 3 ; et éventuellement un ou plusieurs des composants (c) et/ou (d) suivants :

c) des organosilanes de formule III :

$$R_n'' \, SiX_{4-n} \qquad (III)$$

dans laquelle R'', X et n ont le sens précité,

d) des oxydes, solubles dans le milieu de réaction, peu volatils, d'un élément des groupes principaux Ia à Va ou des sous-groupes IVb ou Vb du système périodique, à l'exclusion du titane et du zirconium, ou des composés d'un de ces éléments formant des oxydes solubles dans le milieu de réaction, peu volatils dans les conditions de réaction,

à une précondensation en l'absence d'eau, éventuellement en présence d'un catalyseur de condensation anhydre et éventuellement en présence d'un solvant anhydre puis, par addition d'eau et éventuellement d'un catalyseur de condensation, à une poursuite de la condensation, en utilisant 1 à 60 moles % du composant a), 20 à 99 moles % du composant b), 0 à 40 moles % du composant c) et 0 à 50 moles % du composant d), et le nombre total des moles des composants a), b), c), et d) formant 100 %.

2. Procédé selon la revendication 1, caractérisé en ce qu'on utilise, par rapport au nombre total de moles des composants de départ, 2 à 30 moles %, avantageusement 5 à 20 moles %, du composant a), 50 à 99 moles %, avantageusement 60 à 95 moles %, du composant b), au maximum 30 moles % du composant c) et au maximum 30 moles % du composant d).

3. Procédé selon la revendication 1 ou 2, caractérisé en ce qu'on conduit la précondensation en présence d'un catalyseur acide ou basique de condensation.

4. Procédé selon l'une des revendications 1 à 3, caractérisé en ce qu'on conduit la poursuite de la condensation en présence d'un catalyseur acide ou basique de condensation.

5. Procédé selon l'une des revendications 1 à 4, caractérisé en ce qu'on soumet l'hétéropolycondensat d'acide silicique ayant subi une poursuite de condensation à achèvement de condensation par traitement thermique à une température allant jusqu'à 150 °C, avantageusement une température de 70 à 130 °C.

6. Procédé selon l'une des revendications 1 à 4, caractérisé en ce qu'on polymérise, en présence d'un générateur de radicaux libres, un condensat ayant subi une poursuite de condensation jusqu'à une consistance encore visqueuse, dans lequel au moins un composant de départ contient une double liaison polymérisable, avec,

i) lui-même, ou

ii) au moins un autre condensat ayant subi une poursuite de condensation selon l'une des revendications 1 à 4 jusqu'à au moins une consistance encore plus visqueuse, dans lequel au moins un composant de départ contient une double liaison polymérisable, ou

iii) au moins un monomère à insaturation simple, copolymérisable, qui est miscible au condensat ou y est soluble.

7. Procédé selon la revendication 6, caractérisé en ce que le monomère à insaturation simple, copolymérisable (iii) est choisi parmi l'acide (meth)acrylique et ses sels, des esters de l'acide (meth)acrylique, des amides de l'acide (meth)acrylique, des composés allyliques, la N-vinylpyrrolidone et/ou le styrène.

8. Procédé selon la revendication 6 ou 7, caractérisé en ce qu'on conduit la polymérisation en outre en présence de (iv) au moins un composé à insaturation multiple jouant le rôle d'agent de réticulation.

9. Procédé selon la revendication 8, caractérisés en ce que l'agent de réticulation (iv) est choisi parmi du di(meth)acrylate d'éthylèneglycol, du di(meth)acrylate de diéthylèneglycol, du di(meth)acrylate de triéthylèneglycol, du di(meth)acrylate de butylèneglycol, du di(meth)acrylate de néopentylglycol, du tri(meth)acrylate de pentaérythritol, du tétra(meth)acrylate de pentaérythritol, le (meth)acrylate d'allyle, le tri(meth)acrylate de triméthylolpropane, le divinylbenzène et/ou le phtalate de diallyle.

10. Utilisation des hétéropolycondensats d'acide silicique obtenus dans le procédé selon l'une des revendications 1 à 9 à des fins optiques, par exemple sous forme de lentilles, en particulier des lentilles de contact, ou comme constituants de telles lentilles.

11. Lentille, en particulier lentille de contact, qui consiste entièrement ou en partie en un hétéropolycondensat d'acide silicique obtenus dans le procédé selon l'une des revendications 1 à 9.